# FASCICULE DE BREVET EUROPEEN

(11) **EP 1 903 283 B1**
(45) Date de publication et mention de la délivrance du brevet: **16.03.2016**
(21) Numéro de dépôt: 07116895.9
(22) Date de dépôt: 21.09.2007
(51) Int. Cl.: F02C 3/14, F23R 3/60, F23R 3/10

(54) **Chambre de combustion annulaire d'une turbomachine**
Ringförmige Brennkammer eines Turbotriebwerks
Annular combustion chamber of a turbomachine

(30) Priorité: 22.09.2006 FR 0653896
(43) Date de publication de la demande: 26.03.2008
(73) Titulaire: SNECMA, 75015 Paris (FR)
(72) Inventeur: Commaret, Patrice, 77950, Rubelles (FR); Hernandez, Didier, 77720, Quiers (FR); Locatelli, David, 01170, Gex (FR)
(74) Mandataire: Intès, Didier Gérard André

(56) Documents cités:
- EP-A- 1 265 033
- EP-A- 1 340 941
- EP-A- 1 760 404
- EP-A- 1 777 460
- EP-A- 1 826 492
- EP-A1- 1 265 032
- FR-A- 2 900 976
- FR-A1- 2 219 311
- US-A- 6 164 074
- US-A1- 2006 010 879

## Description

L'invention concerne une chambre de combustion annulaire d'une turbomachine. Elles se destine à tout type de turbomachine : turboréacteur, turbopropulseur, turbine à gaz terrestre, etc.

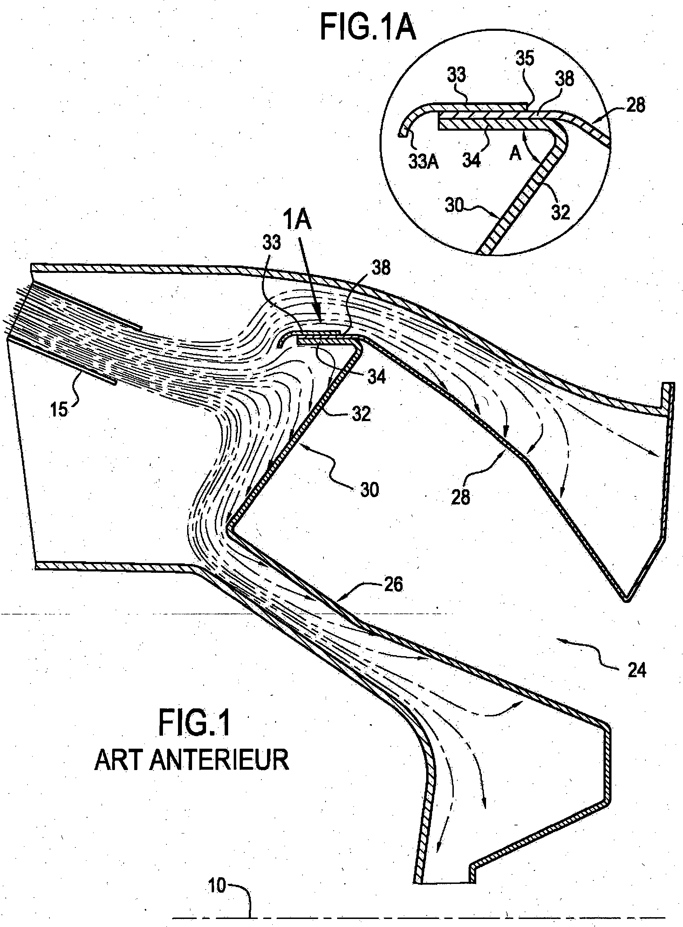

La figure 1 représente schématiquement, en demi-section axiale, une partie de turboréacteur équipée d'un compresseur/diffuseur centrifuge et d'une chambre de combustion directe 24, de type connu.

La chambre de combustion 24 présente une symétrie générale de révolution autour de l'axe de rotation 10 du rotor de la turbomachine. La chambre 24 comprend une paroi intérieure 26, une paroi extérieure 28, et un fond de chambre 30 disposé entre lesdites parois, dans la région amont de ladite chambre, le fond de chambre présentant une partie centrale 32 et une bride de fixation extérieure 34, et la paroi extérieure 28 présentant une bride de fixation amont 38, le fond de chambre et la paroi extérieure étant fixés ensemble par leurs brides de fixation 34, 38. Les brides de fixation 34, 38 sont de forme générale conique ou cylindrique et se superposent.

Dans les turboréacteurs à compresseur/diffuseur centrifuge, la veine de diffusion de l'air comprimé en provenance du diffuseur (plus précisément du redresseur 15 du diffuseur) représentée en traits fins sur la figure 1, est orientée plus ou moins perpendiculairement à la partie centrale 32 du fond de chambre. Cette orientation dépend, en outre, de l'inclinaison générale de la chambre de combustion 24 par rapport à l'axe de rotation 10 de la turbomachine. La chambre 24 peut, en effet, être plus ou moins inclinée de manière à réduire son encombrement axial (i.e. suivant l'axe 10).

Avec une telle veine de diffusion, les brides de fixation 34 et 38 forment un obstacle à l'écoulement de l'air comprimé, ce qui crée des turbulences en aval desdites brides. Pour limiter ces turbulences, il est connu de rapporter sur la face extérieure de la bride 38 une pièce de carénage annulaire 33. Le bord libre 33A, ou bord amont, de cette pièce 33 est recourbé vers la partie centrale 32 du fond de chambre 30 de manière à former une rampe favorisant le contournement aérodynamique desdites brides 34, 38 et limitant au mieux les pertes de charge.

La structure de la chambre de combustion de la figure 1 est néanmoins complexe. Par ailleurs, la pièce de carénage annulaire forme avec la paroi extérieure 28 une marche descendante 35 (voir figure 1A), ce qui crée des turbulences dans l'écoulement de l'air au niveau de cette marche. D'autres exemples connus de chambre de combustion de turboréacteur sont décrits dans les demandes de brevet publiées EP 1265033 A1 et US 2006/0010879 A1.

L'invention vise à proposer une chambre de combustion, selon la revendication 1, de structure simplifiée, ayant des propretés aérodynamiques comparables, voire meilleures que celles de la chambre de la figure 1.

L'invention a pour objet une chambre de combustion annulaire d'une turbomachine, comprenant une paroi intérieure, une paroi extérieure et un fond de chambre disposé entre lesdites parois, dans la région amont de ladite chambre, le fond de chambre présentant une partie centrale et une bride de fixation extérieure, et la paroi extérieure présentant une bride de fixation amont, le fond de chambre et la paroi extérieure étant fixés ensemble par leurs brides de fixation, caractérisée en ce que le bord libre de ladite bride de fixation extérieure est recourbé vers l'intérieur, de manière à former une rampe favorisant le contournement aérodynamique de ces brides de fixation.

La chambre de combustion de l'invention ne comprend donc plus de pièce de carénage de sorte que sa structure est simplifiée. Par la même occasion, le montage de la chambre de combustion est simplifié.

Dans la présente demande, l'amont et l'aval sont définis par rapport au sens d'écoulement normal de l'air à l'intérieur de la turbomachine, tandis que l'intérieur et l'extérieur d'une pièce sont définis par rapport à l'axe de rotation de la turbomachine, les parties intérieure et extérieure d'un ensemble ou d'une pièce étant respectivement la partie la plus proche et la partie la plus éloignée dudit axe.

Avantageusement, ladite paroi extérieure est fixée de manière démontable au fond de chambre (ce qui exclut la possibilité de braser ou de souder cette paroi au fond de chambre). Par exemple, la paroi extérieure et le fond de chambre sont fixés par boulonnage. De cette manière, il est possible de démonter la paroi extérieure de la chambre de combustion pour accéder à l'intérieur de cette chambre dans le cadre d'opérations de réparation ou de maintenance.

Selon un mode de réalisation de l'invention, la face extérieure de la bride de fixation extérieure du fond de chambre présente un épaulement. Ledit épaulement forme sur la face extérieure de la bride de fixation extérieure une marche descendante de l'amont vers l'aval

Avantageusement, selon ce mode de réalisation, lors de l'assemblage de la paroi extérieure et du fond de chambre, on amène le bord libre de la bride de fixation amont de la paroi extérieure en butée contre ledit épaulement, ce qui permet de positionner facilement et correctement lesdites brides de fixation l'une par rapport à l'autre, avant de les assembler.

Avantageusement, selon ce premier mode de réalisation, la hauteur dudit épaulement est supérieure à l'épaisseur de la bride de fixation amont. Ceci permet de former entre la face extérieure de la bride de fixation extérieure et la face extérieure de la bride de fixation amont une marche descendante. Or, sur la face extérieure, une marche descendante crée moins de perturbations dans la veine de diffusion qu'une marche montante.

Avantageusement encore, pour limiter au maximum les perturbations on préfère ne former aucune marche entre les brides de fixation, la hauteur dudit épaulement est alors sensiblement égale à l'épaisseur de la bride de fixation amont.

Pour des angles supérieurs à 60°, entre la bride de fixation extérieure et la partie centrale du fond de chambre, on réalise le fond de chambre de façon conventionnelle par emboutissage. Ledit épaulement est, si nécessaire, réalisé lors d'une étape d'usinage ultérieure. En revanche, pour des angles inférieurs (ou égaux) à 60°, on réalise avantageusement le fond de chambre par usinage d'une pièce forgée.

L'invention et ses avantages seront mieux compris à la lecture de la description détaillée qui suit. Cette description fait référence aux figures annexées sur lesquelles :
- la figure 1 représente schématiquement en demi-section axiale une partie de turboréacteur d'avion, équipée d'une chambre de combustion connue ;
- la figure 1A est une vue de détail de la figure 1, suivant la flèche 1A;
- la figure 2 représente schématiquement en demi-section axiale la même partie de turboréacteur d'avion que celle de la figure 1, mais équipée cette fois d'un exemple de chambre de combustion selon l'invention ; et
- la figure 2A est une vue de détail de la figure 2, suivant la flèche 2A.

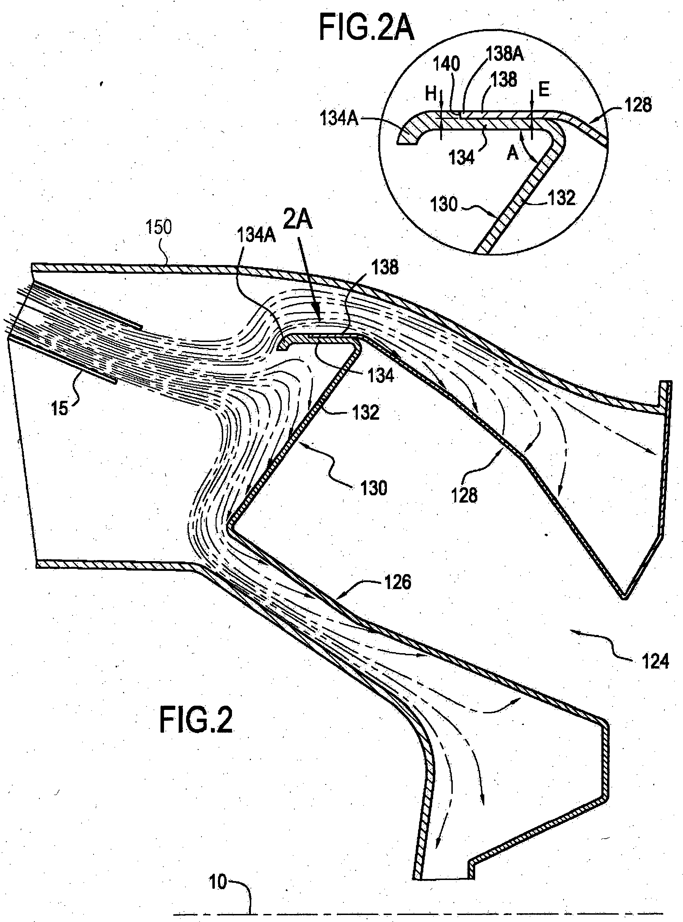

La chambre de combustion 124 de la figure 2 présente des parties analogues à celles de la figure 1. Ces parties sont repérées par les mêmes références numériques augmentées de 100.

La chambre de combustion 124 est dite annulaire en ce sens qu'elle présente une symétrie générale de révolution autour de l'axe de rotation 10 de la turbomachine. La chambre de combustion 124 comprend une paroi intérieure 126, une paroi extérieure 128 et un fond de chambre 130 disposé entre lesdites parois dans la région amont de ladite chambré, le fond de chambre présentant une partie centrale 132 et une bride de fixation extérieure 134, et la paroi extérieure 128 présentant une bride de fixation amont 138, le fond de chambre et la paroi extérieure étant fixés ensemble par leurs brides de fixation 134, 138. La paroi intérieure 126, la paroi extérieure 128 et le fond de chambre 130 présentent une symétrie générale de révolution autour de l'axe 10.

Les brides de fixation 134, 138 sont de forme générale conique ou cylindrique (centrée sur l'axe 10) et se superposent au moins partiellement (partiellement dans l'exemple de la figure 2).

On rappelle que l'intérieur et l'extérieur sont définis par rapport à l'axe 10, suivant une direction radiale (i.e. perpendiculaire à cet axe 10), de sorte que la partie (radialement) intérieure d'une pièce est plus proche de l'axe 10 que la partie (radialement) extérieure de cette même pièce.

La paroi intérieure 126 est soudée au fond de chambre 130.

La paroi extérieure 128 est fixée au fond de chambre par boulonnage. Plus précisément, des boulons (non représentés) répartis circonférentiellement, sont passés dans des trous ménagés dans les brides de fixation 134, 138 du fond de chambre et de la paroi extérieure. Lors du montage, on fait correspondre ces trous de fixation et on y fait passer les vis des boulons, avant de serrer ces boulons autour des brides.

La paroi extérieure 128 peut ainsi être facilement démontée en déboulonnant les brides de fixation 134, 138.

Conformément à l'invention, le bord libre 134A, ou bord amont, de la bride de fixation extérieure 134 du fond de chambre 130 est recourbé vers l'intérieur, c'est-à-dire vers l'axe de rotation 10 (et non vers le carter extérieur 150 qui entoure la chambre de combustion 124). Autrement dit, le bord libre 134A de la bride 134 est recourbé vers la partie centrale 132 du fond de chambre, située à l'intérieur de la bride 134. En outre, la face extérieure de cette bride 134 présente un épaulement 140 de hauteur H. Ainsi la zone de la face extérieure de la bride 134 située en aval de l'épaulement 140 est en retrait par rapport à la zone située en amont de cet épaulement.

Lé bord libre 138A, ou bord amont, de la bride de fixation amont 138 vient en butée contre cet épaulement 140. La hauteur H de l'épaulement 140 correspond sensiblement à l'épaisseur E de la bride 138 de la paroi extérieure 128, de manière à ne pas créer (du côté extérieur) de différence de niveau entre les brides 134 et 138 (une telle différence perturberait l'écoulement d'air).

Enfin, on notera que lors de l'assemblage du fond de chambre de la paroi extérieure, l'épaulement 140, permet de positionner les brides 134 et 138 l'une par rapport à l'autre suivant la direction axiale, de sorte qu'il est plus facile ensuite de faire correspondre les trous de boulonnage de ces brides.

## Revendications

1. Chambre de combustion annulaire d'une turbomachine, comprenant une paroi intérieure (126), une paroi extérieure (128) et un fond de chambre (130) disposé entre lesdites parois, dans la région amont de ladite chambre, le fond de chambre présentant une partie centrale (132) et une bride de fixation extérieure (134), et la paroi extérieure (128) présentant une bride de fixation amont (138), le fond de chambre et la paroi extérieure étant fixés ensemble par leurs brides de fixation (134, 138), le bord libre (134A) de ladite bride de fixation extérieure (134) étant recourbé vers l'intérieur, **caractérisée en ce que** la face extérieure de la bride de fixation extérieure (134) du fond de chambre (130) présente un épaulement (140), et **en ce que** le bord libre (138A) de la bride de fixation amont (138) vient en butée contre cet épaulement (140).

2. Chambre de combustion selon la revendication 1, dans laquelle la paroi extérieure (128) est fixée de manière démontable au fond de chambre (130).

3. Chambre de combustion selon la revendication 1, dans laquelle la hauteur (H) dudit épaulement (140) est supérieure ou sensiblement égale à l'épaisseur (E) de ladite bride de fixation amont (138).

4. Chambre de combustion selon la revendication 1, dans laquelle la hauteur (H) dudit épaulement (140) est sensiblement égale à l'épaisseur (E) de ladite bride de fixation amont (138).

5. Chambre de combustion selon l'une quelconque des revendications 1 à 4, dans laquelle ladite bride de fixation extérieure (134) forme avec la partie centrale (132) du fond de chambre (130) un angle (A) inférieur ou égal à 60°.

6. Chambre de combustion selon l'une quelconque des revendications 1 à 5, dans laquelle le fond de chambre (130) est réalisé par usinage d'une pièce forgée.

7. Chambre de combustion selon l'une quelconque des revendications 1 à 6, dans laquelle les brides de fixation extérieure (134) et amont (138) sont de forme générale conique ou cylindrique et se superposent, au moins partiellement.

8. Chambre de combustion selon l'une quelconque des revendications 1 à 7, dans laquelle les brides de fixation extérieure (134) et amont (138) se superposent partiellement, le bord libre (134A) de la bride de fixation extérieure (134) s'étendant vers l'amont au-delà du bord libre (138A) de la bride de fixation amont (138).

9. Turbomachine comportant une chambre de combustion selon l'une quelconque des revendications précédentes.

## Patentansprüche

1. Ringförmige Brennkammer einer Turbomaschine, umfassend eine Innenwand (126), eine Außenwand (128) und einen zwischen den Wänden angeordneten Kammerboden (130) im stromaufwärtigen Bereich der Kammer, wobei der Kammerboden einen mittleren Teil (132) und einen äußeren Befestigungsflansch (134) aufweist und wobei die Außenwand (128) einen stromaufwärtigen Befestigungsflansch (138) aufweist, wobei der Kammerboden und die Außenwand über ihre Befestigungsflansche (134, 138) untereinander befestigt sind, wobei der freie Rand (134A) des äußeren Befestigungsflansches (134) nach innen umgebogen ist, **dadurch gekennzeichnet, dass** die Außenseite des äußeren Befestigungsflansches (134) des Kammerbodens (130) eine Schulter (140) aufweist und dass der freie Rand (138A) des stromaufwärtigen Befestigungsflansches (138) an dieser Schulter (140) in Anschlag gelangt.

2. Brennkammer nach Anspruch 1, wobei die Außenwand (128) an dem Kammerboden (130) abnehmbar befestigt ist.

3. Brennkammer nach Anspruch 1, wobei die Höhe (H) der Schulter (140) größer oder im Wesentlichen gleich der Dicke (E) des stromaufwärtigen Befestigungsflansches (138) ist.

4. Brennkammer nach Anspruch 1, wobei die Höhe (H) der Schulter (140) im Wesentlichen gleich der Dicke (E) des stromaufwärtigen Befestigungsflansches (138) ist.

5. Brennkammer nach einem der Ansprüche 1 bis 4, wobei der äußere Befestigungsflansch (134) mit dem mittleren Teil (132) des Kammerbodens (130) einen Winkel (A) kleiner oder gleich 60° bildet.

6. Brennkammer nach einem der Ansprüche 1 bis 5, wobei der Kammerboden (130) durch Bearbeiten eines Schmiedestücks gefertigt ist.

7. Brennkammer nach einem der Ansprüche 1 bis 6, wobei der äußere (134) und der stromaufwärtige (138) Befestigungsflansch eine allgemein konische oder zylindrische Form aufweisen und sich wenigstens teilweise überlagern.

8. Brennkammer nach einem der Ansprüche 1 bis 7, wobei der äußere (134) und der stromaufwärtige (138) Befestigungsflansch sich teilweise überlagern, wobei der freie Rand (134A) des äußeren Befestigungsflansches (134) sich in stromaufwärtiger Richtung über den freien Rand (138A) des stromaufwärtigen Befestigungsflansches (138) hinaus erstreckt.

9. Turbomaschine, die eine Brennkammer nach einem der vorhergehenden Ansprüche umfasst.

## Claims

1. An annular turbomachine combustion chamber comprising an inner wall (126), an outer wall (128), and a chamber end wall (130) disposed between said inner and outer walls in the upstream region of said chamber, the chamber end wall presenting a central portion (132) and an outer assembly flange (134), and the outer wall (128) presenting an upstream assembly flange (138), the chamber end wall and the outer wall being assembled together by their assembly flanges (134, 138), the free edge (134A) of said outer assembly flange (134) being curved inwards, the combustion chamber being **characterized in that** the outer face of the outer assembly flange (134) of the chamber end wall (130) presents a shoulder (140), and **in that** the free edge (138A) of the upstream assembly flange (138) comes into abutment against the shoulder (140).

2. A combustion chamber according to claim 1, in which the outer wall (128) is releasably assembled to the chamber end wall (130).

3. A combustion chamber according to claim 1, in which the height (H) of said shoulder (140) is greater than or substantially equal to the thickness (E) of said upstream assembly flange (138).

4. A combustion chamber according to claim 1, in which the height (H) of said shoulder (140) is substantially equal to the thickness (E) of said upstream assembly flange (138).

5. A combustion chamber according to any one of claims 1 to 4, in which said outer assembly flange (134) cooperates with the central portion (132) of the chamber end wall (130) to form an angle (A) that is less than or equal to 60°.

6. A combustion chamber according to any one of claims 1 to 5, in which the chamber end wall (130) is made by machining a forging.

7. A combustion chamber according to any one of claims 1 to 6, in which the outer assembly flange (134) and the upstream assembly flange (138) are generally conical or cylindrical in shape, and overlap, at least in part.

8. A combustion chamber according to any one of claims 1 to 7, in which the outer assembly flange (134) and the upstream assembly flange (138) partially overlap, the free edge (134A) of said outer assembly flange (134) extending upstream beyond the free edge (138A) of the upstream assembly flange (138).

9. A turbomachine including a combustion chamber according to any preceding claim.
